# EUROPEAN PATENT SPECIFICATION

(11) **EP 1 103 430 B1**
(45) Date of publication and mention of the grant of the patent: **09.01.2013**
(21) Application number: 00500248.0
(22) Date of filing: 23.11.2000
(51) Int. Cl.: B60R 21/20

(54) **Device for an improved fast fastening of an airbag module on the steering wheel**
Vorrichung zum besseren, schnellen Befestigen eines Airbagmoduls an einem Lenkrad
Dispositif de fixation rapide améliorée d'un module de coussin gonflable sur un volant

(30) Priority: 23.11.1999 ES 9902966 U
(43) Date of publication of application: 30.05.2001
(73) Proprietor: Dalphi Metal España, S.A., 28006 Madrid (ES)
(72) Inventor: Gras Tous, Luis, 28006 Madrid (ES)
(74) Representative: Mehnert, Bernhard

(56) References cited:
- DE-A- 19 503 816
- DE-U- 29 602 630
- US-A- 5 087 069
- US-A- 5 508 481
- "SNAP-IN INFLATABLE RESTRAINT MODULE MOUNTING SYSTEM FOR STEERING WHEELS" RESEARCH DISCLOSURE,GB,INDUSTRIAL OPPORTUNITIES LTD. HAVANT, no. 403, 1 November 1997 (1997-11-01), page 825 XP000726737 ISSN: 0374-4353

## Description

The invention relates to a fast fastening device of an airbag module on the steering wheel according to the preamble of claim 1.

Such a device is known, e.g. from DE 195 03 816 A1.

Therein, the airbag module comprises two hooks which are held in a tight clipping manner behind spring elements located at a steering wheel frame.

In view thereof, it is the objective of the invention to provide an improved fast fastening device of an airbag module on the steering wheel wherein problems derived from vibrations are avoided.

For a fast fastening device of an airbag module on the steering wheel of the above kind this objective is solved in an inventive manner by the features of the characterizing portion of claim 1.

Accordingly, such a device for an improved fast fastening of an airbag module on a steering wheel achieves the purpose of fastening of the airbag module on the steering wheel frame, by using a direct-acting spring, and positioning the airbag module in a floating way with regard to the frame.

The incorporation of the spring in question allows the steering wheel insert to perform a simplified deblocking with the cooperation of a tool, such as a screwdriver, for example, through an acting access over which the tool is inserted for performing the deblocking.

Advantageously, the invention reduces to the utmost the number of parts used, and, still allowing coupling and uncoupling operations to be performed in a fast and sure way.

The improved fast fastening arrangement of an air- bag module on a steering wheel as proposed by the invention, is configured per se like a fast clipping in which the airbag module remains floating due to the dimensional configuration, said clipping coming only into contact when the airbag device is released, retaining said module so that problems derived from vibrations are avoided.

The invention presents two projections emerging towards the interior of the steering wheel to the inclined plane on the plate acting as a closing device of the airbag container, and on the frame two opposed housings are arranged, which are confronted to said projections, and between the housings there is located an elastic steel wire constituting the own arrangement.

The assembly is performed by exerting pressure on the airbag module, for which, the elastic steel wire opens towards the interior, the module remaining floating owing to its dimensions, and coming into contact and exerting retention and opposition to be taking apart, operation only performed when the airbag release is operating.

As above mentioned, the invention presents an access from the exterior through which, and using a tool, such as a screwdriver or similar tool, the resistance of a spring configured as an elastic steel wire is overcame, allowing the clipping to be deblocked, and consequently the module can be taking out.

In order to complement this description and aid to a better understanding of the characteristics of the invention, the appending sheet of drawings, which is a part of this specification, shows, by way of illustrative and non-limitative example, the following:

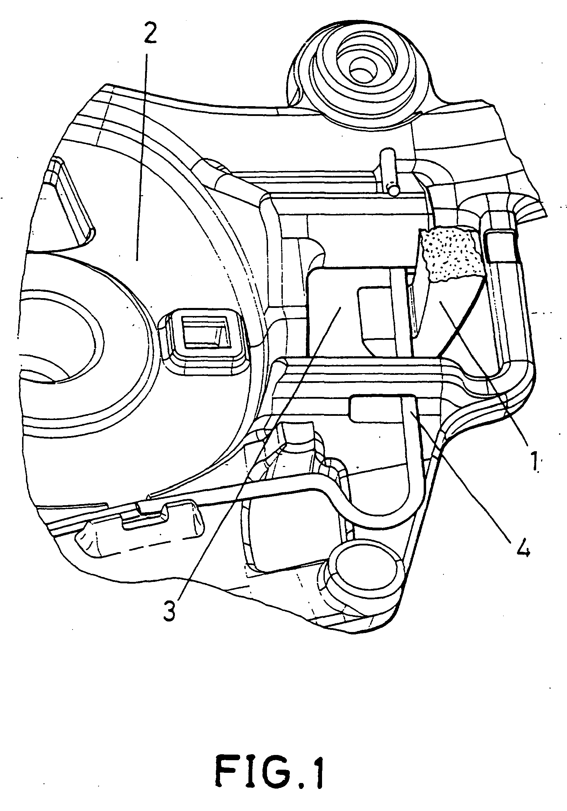

Figure 1 shows a detail of the invention, relative to an improved fast fastening of an airbag module on a steering wheel.

This figure shows what the improved fast fastening arrangement of an airbag module on a steering wheel of the invention, is constituted starting from two projections (1) arranged towards the interior of a steering wheel with the inclined plane in the plate acting as a closing device of the airbag container, while the frame (2) has two opposed housings (3) confronted to said projections (1), and between the opposed housings (3), there is an elastic steel wire (4) constituting the clipping.

The assembly is performed by, exerting pressure an the airbag module, so the wire (4) opens towards the interior, the module remaining floating owing to its dimensions and coming into contact and exerting retention and opposition to be taken apart only when the airbag release operates.

An access from the exterior has been provided, and through which and by means of a screwdriver or similar tool, the resistance of the spring configured as an elastic steel wire (4), is overcame, allowing the clipping to be deblocked and, therefore, the module extraction.

## Claims

1. Fast fastening device of an airbag module on a steering wheel, comprising:
• two projections (1) positioned on the airbag module, and emerging towards an interior of the steering wheel,
• a steering wheel frame (2) fitted with two opposed housings (3) facing both projections (1), and
• an elastic steel wire (4) which constitutes a coupling arrangement openable towards the interior of the steering wheel and being provided between the opposed housings (3) and the projections (1)
wherein the fast fastening device presents an access from the exterior, through which, and with the cooperation of a tool, the resistance of the elastic steel wire (4) can be overcome, to thereby allow the coupling to be de-blocked and an extraction of the airbag module from the steering wheel to be performed,
**characterized in that** the fast fastening device is configured such that, in a coupled stage, for avoidance of vibration caused problems, the airbag module is in a floating state, in which the coupling arrangement is out of contact other than at an operational release of the airbag in which the clipping is in contact and exerts retention and opposition to a separation of the airbag module from the steering wheel.

## Patentansprüche

1. Vorrichtung zur schnellen Befestigung eines Airbagmoduls an einem Lenkrad, mit:
- zwei Vorsprüngen (1), die an dem Airbagmodul angebracht sind und in Richtung eines Innenraums des Lenkrades herausragen,
- einem Lenkradrahmen (2), der an zwei entgegengesetzten Gehäusen (3) gegenüber den beiden Vorsprüngen (1) befestigt ist, und
- einem elastischen Stahldraht (4), der eine Kopplungsanordnung darstellt, welche in Richtung des Innenraums des Lenkrades zu öffnen ist und zwischen den entgegengesetzten Gehäusen (3) und den Vorsprüngen (1) vorgesehen ist,
wobei die Vorrichtung zum schnellen Befestigen einen Zugang von außen aufweist, durch welchen, und im Zusammenwirken mit einem Werkzeug, der Widerstand des elastischen Stahldrahtes (4) überwunden werden kann, um dadurch zu ermöglichen, dass die Kopplung freigegeben wird und ein Herausziehen des Airbagmoduls aus dem Lenkrad erfolgt,
**dadurch gekennzeichnet, dass** die Vorrichtung zum schnellen Befestigen derart ausgeführt ist, dass sich das Airbagmodul zur Vermeidung von durch Schwingung verursachten Problemen in einer gekoppelten Phase in einem Schwebezustand befindet, in dem die Kopplungsanordnung außer Kontakt ist, im Gegensatz zu einer betriebsbedingten Freisetzung des Airbags, bei welcher die Klemmverbindung in Kontakt ist und eine Trennung des Airbagmoduls von dem Lenkrad zurückhält und dieser entgegenwirkt.

## Revendications

1. Dispositif de fixation rapide d'un module de coussin gonflable sur un volant de direction, comprenant:
• deux ergots (1) disposé sur le module de coussin gonflable, et débouchant vers l'intérieur du volant de direction,
• une structure de volant (2) munie de deux logements opposés (3) faisant face aux deux ergots (1), et
• un fil d'acier élastique (4) qui constitue un dispositif de couplage pouvant être ouvert vers l'intérieur du volant de direction, et étant prévu entre les logements opposés (3) et les ergots (1)
dans lequel le dispositif de fixation rapide présente un accès depuis l'extérieur, à travers lequel, et avec l'aide d'un outil, la résistance du fil d'acier élastique (4) peut être surmontée, pour ainsi permettre de débloquer l'accouplement et effectuer l'extraction du module airbag du volant de direction,
**caractérisé en ce que** le dispositif de fixation rapide est configuré de telle sorte que, dans une phase couplée, et pour éviter les problèmes provoqués par les vibrations, le module de coussin gonflable est dans un état flottant, dans lequel le dispositif de couplage est sans contact en dehors de la période opérationnelle du module airbag durant laquelle le clipsage est en contact et exerce une rétention et une opposition à une séparation du module d'airbag du volant.
